# EUROPEAN PATENT SPECIFICATION

(11) **EP 2 481 230 B1**
(45) Date of publication and mention of the grant of the patent: **29.04.2015**
(21) Application number: 10767951.6
(22) Date of filing: 22.09.2010
(51) Int. Cl.: H04W 12/06, H04L 29/06, H04W 4/12

(54) **Authentication method, payment authorisation method and corresponding electronic equipments**
Authentifizierungsverfahren, Zahlungsautorisierungsverfahren und entsprechende elektronische Geräte
Procédé d'authentification, procédé d'autorisation de paiement et équipements électroniques correspondants

(30) Priority: 25.09.2009 IT MI20091640
(43) Date of publication of application: 01.08.2012
(73) Proprietor: 4Tech+ S.r.l., 20123 Milano (IT)
(72) Inventor: COLOMBO, Danilo, 20059 Vilmercate (IT); BERGANTINI, Mario, 20091 Bresso (IT); MINARDI, Alessandro, 20068 Peschiera Borromeo (IT)
(74) Representative: De Ros, Alberto
(86) International application number: PCT/EP2010/063979
(87) International publication number: WO 2011/036179

(56) References cited:
- GB-A- 2 384 396
- US-A1- 2009 215 477
- US-B1- 6 170 058

## Description

### Field of the Invention

The present invention relates to an authentication method, a payment authorisation method and correspond electronic equipments.

### State of the Art

In the computer security field, authentication is defined as the process by which a computer, a software program or an user, verifies the correct, or at least presumed, identity of another computer, software program or user.

Currently, there are lots of different authentication kinds, with various levels of security and usability. It ranges from the classical pair of "username/password", to the combination of those with personal "one-time" codes, to the codes sequencers most recently used by bank institutions, also called "security tokens", which replaced the "one-time" codes.

From British patent application n° 2384396, there is known an authentication system for safely transferring information through messages of a mobile communication network (e.g. SMS of GSM); messages are fully or partially encrypted; both the user originating the information and the user receiving the information are authenticated by an authorisation system that transfer the information; authentication is carried out by the authorisation system based on PINs received by it from both users (step 322 in Fig.4A and step 350 in Fig.4B) and compared (step 322 in Fig.4A and step 350 in Fig.4B) with PINs previously stored internally (step 308 in Fig.4A and step 328 in Fig.4B); the information authenticated transfer process provides that transaction-specific public keys are transferred from the authentication system to the originating terminal (message 310 in Fig.4A) and from the authentication system to the receiving terminal (message 334 in Fig.4B).

### Summary of the Invention

Although the solution described in the above mentioned patent application is quite certain and safe, there is the risk that authenticating information (i.e. the PINs) and encrypting information (i.e. the public keys) may be captured and misused by malicious users as they are transmitted over the air and stored inside the authentication system.

The present invention is a solution designed to ensure a more certain and safe authentication of a person through a mobile phone terminal for the use of a generic service.

The requirement of authentication applies to all services that require the access to sensitive or confidential data, the secure communication of such data to third parties, and in general to all services that involve transfers of amounts of money or valuables or authorizations for such transfers in various capacities. In this context, the most common examples of human activities requiring authentication by an electronic system are: the purchase of a good on the Internet, the request for a certificate to a public institution, the use of a computer, the withdrawal of an amount of money from an ATM, the purchase of a good through a credit card or debit card at a normal retailer, and the carrying out of a banking transaction via the Internet (so-called "Home Banking").

The main technical features of the present invention are set out in the annexed claims to be considered an integral part of the present description; other technical features of the present invention are set out in the following detailed description. The key aspect of the present invention is an authentication method; other aspects regard a payment authorisation method based on such authentication method and electronic equipments adapted for such methods.

The present invention had three main objectives:
- isolation of sensitive information: avoiding exchange of sensitive data (PINs, cryptographic keys, ...) during the authentication procedure;
- high certainty, robustness and security;
- high usability by the users both in terms of operation (simple to use) and in terms of practicality (always available at any time).

The solution according to the present invention is based on the exchange of information between two entities:
- a "User", user of a service, i.e. the entity, typically a person, wishing to authenticate;
- a "Manager", provider of the service, i.e. the entity with which the User intends to authenticate in order to use the service.

A third entity, the "Intermediary", located between the User and the Manager, takes care of providing the information technology support necessary for the exchange of information between the other two entities and for the authentication of the User toward the Manager. In some contexts, the Intermediary and Manager may coincide, but it is preferred to keep this logic separation for convenience of exposition.

The solution according to the present invention requires typically the installation of a software program on the mobile phone terminal of the User", called "Client"; this software program takes care of controlling the communication with the Manager and to provide the User with an appropriate phone-terminal application interface. Instead, the Manager has typically available a Web-type interface for all its own operations; alternatively, it may be provided that the Manager has a mobile phone terminal with a Client that reflects completely that of the User.

The flow of information exchanged between the entities defined above is realized by means of text messages (phone text messages and/or computer text messages) and is split in two sections:
- the section Manager-Intermediary: in this section the transport of information is via TCP/IP protocol for the Web-type interface and via SMS, MMS or TCP/IP protocol for the Client.
- the section Intermediary-User; in this section the transport of information is via SMS, MMS or TCP/IP protocol (through e.g. an instant messaging technology) for the Client;

According to the most typical implementation of the present invention, there is provided: SMS transport on the Intermediary-User section and TCP/IP transport on the Manager-Intermediary section.

The information exchanged between the User and the Manager is divided into two types: "Control Data" and "Service Data".

Control Data are preferably always coded via asymmetric cryptography keys (public key + private key) at every step of the authentication procedure, thus ensuring confidentiality and authentication.

Asymmetric cryptography, also known as an key-pair cryptography, public/private-key cryptography, or also public-key cryptography, is a type of cryptography where key-pairs are associated to the entities involved in communication:
- the private key, personal and secret, is used to decode an encrypted text;
- the public key, which has to be distributed, is used to encrypt a text directed to an entity who holds the corresponding private key.

Service Data may be "in clear", unless otherwise specified.

Advantageously, the messages are independent of the type of the transport used. Preferably, each text message used during authentication is transported using a single phone text message, in particular one SMS.

### Brief description of the drawings

The present invention as well as with its technical features and advantages will be better understood from the following description to be considered together with the annexed drawings wherein:
Fig.1 is a block diagram useful for understanding a registration procedure according to the present invention,
Fig.2 is a block diagram useful for understanding an authentication procedure according to the present invention, and
Fig.3 is a block diagram useful for understanding a payment procedure according to the present invention incorporating the authentication procedure of Fig.2.

### Detailed description of the invention

Said description and said drawings are explanatory only and non-limiting.

According to the example described in the following, there is a service, hereinafter the "Authentication Service", that can be used by a user, hereinafter the "User" (labelled 7 in the figures), for certifying his identity to any service provider, hereinafter the "Manager" (refer to element 21 in the figures); the authentication service is provided by an entity, hereinafter the "Intermediary" (refer to element 9 in the figures); therefore, basically, three entities are involved: the User, the Manager and the Intermediary; each of these entities are associated to at least one electronic equipment (labelled 8, 9 and 21 in the figures) - in particular the User is associated to a mobile phone terminal having a mobile telephone number, typically a mobile phone (labelled 8 in the figures) - that allow to implement the invention.

It is to be noted that, in a typical real implementation environment, there will be a number of users, a number of managers, and one intermediary.

Three procedures are provided: a subscription procedure that allows the User to subscribe to the Authentication Service, a registration procedure that allows the User to start using the Authentication Service, and an authentication procedure that allows the Manager to authenticate the User.

### Subscription Procedure

At subscription to the Authentication Service, the User provides (directly or indirectly) to the Intermediary, among other data, its own mobile telephone number, i.e. the "User Phone Number"; the User receives (directly or indirectly) from the Intermediate a personal code, called "User Code", that will identify himself uniquely in the context of the Authentication Service, and a software program, called "Client" (more precisely "User Client"), to be installed on his mobile phone terminal; this software program is provided with a key, called the "Registration Key"; this key is generated through e.g. a random base algorithm, it is unambiguous and can be used only once during registration to the Authentication Service; the data of the User, i.e. the mobile telephone number, the User Code, the Registration Key, ..., are stored in a "Database" accessible by the Intermediary for future use; this is the subscription procedure.

Once the subscription procedure is completed, the registration procedure may start.

### Registration Procedure

The User, in order to be able to take advantage of the Authentication Service, performs the following steps:
1) installing the Client on a mobile phone of the User (associated with the User Phone Number e.g. through the SIM card of the User);
2) configuring on the Client a private code, called PIN [Personal Identification Number]; this code is released neither by the Intermediary nor by the Manager, but is created by the User at the time of registration and is therefore known only to him.

The Client, after the configuration of the PIN by the User, performs the following steps:
1) generating a pair of "public key - private key" (i.e. User keys);
2) encrypting the "User private key" using the PIN as encryption key;
3) saving the User private key, thus encrypted, inside the mobile phone of the User;
4) sending to the Intermediary a "Registration Message" containing at least the generated "User public key" encrypted via the Registration Key".

The Intermediary, after receiving the Registration Message, performs the following steps:
1) validating the received Registration Message, based at least on the sender's mobile telephone number (that should correspond to the User Phone Number) and the Registration Key;
2) generating a pair of "public key - private key" (i.e. Intermediary keys) - such keys of the Intermediary may be associated with this specific User or may be associated with more than one user;
3) associating, in his Database, the locally generated "Intermediary private key" with the User public key received from the User; such Database is so constructed and managed to ensure the compliance with the existing legislation on protection of personal data as well as to ensure data security and integrity;
4) sending to the User a "Registration Validation Message" containing at least the generated "Intermediary public key", encrypted via the Registration Key.

The Client, on board the mobile phone of the User, after receiving the Registration Validation Message, saves the Intermediary public key inside the mobile phone of the User and emits a signal of completed procedure.

At this point the User is registered with the Authentication Service.

It is to be noted that, depending on the implementation of the present invention, the subscription procedure and the registration procedure may take place one just after the other.

It is also to be noted that, depending on the implementation of the present invention, these procedure may take place next to the Intermediary electronic equipment or through a safe connection to the Intermediary electronic equipment; in these cases, the registration procedure may be much simplified as the communication between User and Intermediary might be considered completely or highly safe.

### Authentication Procedure

The authentication procedure is triggered by the User who, having the need, requests a service to the Manager.

The User communicates his own User Code, in addition to information about to the service requested, to the Manager. It is to be noted that in some cases such communication is not electronic such as in the case of e.g. the purchase of a good through a credit card or debit card at a normal retailer and that in some cases such communication may correspond to the User directly inputting information into the Manager electronic equipment such as in the case of e.g. the withdrawal of an amount of money from an ATM that in some cases such communication may correspond to the User indirectly inputting information into the Manager electronic equipment such as in the case of e.g. the purchase of a good on the Internet.

The Manager, after receiving the request of service, sends at least the received User Code and possibly information about the service requested to the Intermediary.

It is to be noted that this is typically performed by a software program, called "Client" (more precisely "Manager Client"), running on the electronic equipment associated with the Manager. It may well be that not only the User electronic equipment but also the Manager electronic equipment are mobile phone terminals; this is the case of e.g. an itinerant street vendor.

Afterwards the Intermediary performs the following procedure steps:
1) receiving the User Code and identifying the User and the User Phone Number;
2) generating an "Authentication Key"; this key may be generated by the Intermediary through e.g. a random base algorithm, may be unique and may be provided for single use within the current transaction (i.e. has a temporary use);
3) sending "Authentication Request Message" to the User (more precisely to the mobile phone terminal associated with the Mobile Phone Number, i.e. to the mobile phone of the User). Such message consists of two parts: a first part containing, if and when needed, "Service Data" and a second part containing the Authentication Key, encrypted via the "User public key" and optionally digitally signed.

The User Client, onboard the mobile phone of the User, receives the Authentication Request Message and performs the following steps:
1) warning the person currently using the mobile phone of the User of the presence of an "Authentication Request";
2) providing the Service Data to that person, upon request by him, and asking him whether he intends to authenticate or not with the service (i.e. to use it);
3) asking for a PIN upon a positive response from that person;
4) extracting the User private key" and decrypting the second part of the Authentication Request Message via the received PIN received from that person (i.e. input by him), obtaining in this way the Authentication Key;
5) sending to the Intermediary a message of response to the Authentication Request, containing the Authentication Key (or equivalently a data derived therefrom) encrypted via the Intermediary public key".

The Intermediary receives the response to the Authentication Request and performs the following steps:
1) decrypting the Authentication Key through the Intermediary private key;
2) validating the just decrypted Authentication Key (or equivalently a data derived therefrom);
3) in case of validation with positive outcome, sending a "Confirmed Authentication Message" to the User and the Manager; in case of validation with negative outcome, sending a "Denied Authentication Message" to the User and the Manager.

The authentication procedure is now completed.

### Cryptography and PIN

As already said, the preferred type of cryptography to be used for implementing the present invention, particularly for the authentication procedure, is asymmetric cryptography. Anyway, symmetric cryptography may be totally or partially used during the authentication procedure even if with a reduced safety and certainty; additionally, text messages may be divided into parts wherein each of these parts may be encrypted or non-encrypted, i.e. there may be non-encrypted text messages and/or fully-encrypted text messages and/or partially encrypted text messages depending on their content and/or the entities involved into the exchange but also depending on the specific circumstances and implementation of the present invention.

If asymmetric cryptography is used, the preferred approach is ECC [Elliptic Curve Cryptography]; in this case, the preferred curves are from P-160 to P-256. This approach may advantageously be used also for digitally signing information and/or messages.

If symmetric cryptography is used, the preferred approach is AES [Advanced Encryption Standard]; in this case, the preferred key sizes are from 128 to 256 bits.

As already said a PIN is used as a cryptography key for encrypting and decrypting the User private key. If the Manager is associate to a mobile phone terminal, there may be Manager keys and the Manager private key may stored inside the mobile phone terminal of the Manager encrypted via a "Manager PIN".

Preferably any PIN should be rather short, for example from 4 to 8 digits, so that a person can easy remember it; in this case, using the PIN directly as a cryptography key might be not sufficiently safe; therefore, a hash function is advantageously applied to the PIN giving a sequence of bits (having a length preferably from 128 to 256) sufficiently long to be used as a safe cryptography key. The preferred hash functions family is SHA [Secure Hash Algorithm], in particular from 128 bits to 256 bits.

### Payment Authorization Procedure

The payment authorization procedure may be considered an application of the authentication procedure described above; in this case, the term Buyer would be more appropriate than User and the term Seller would be more appropriate than Manager.

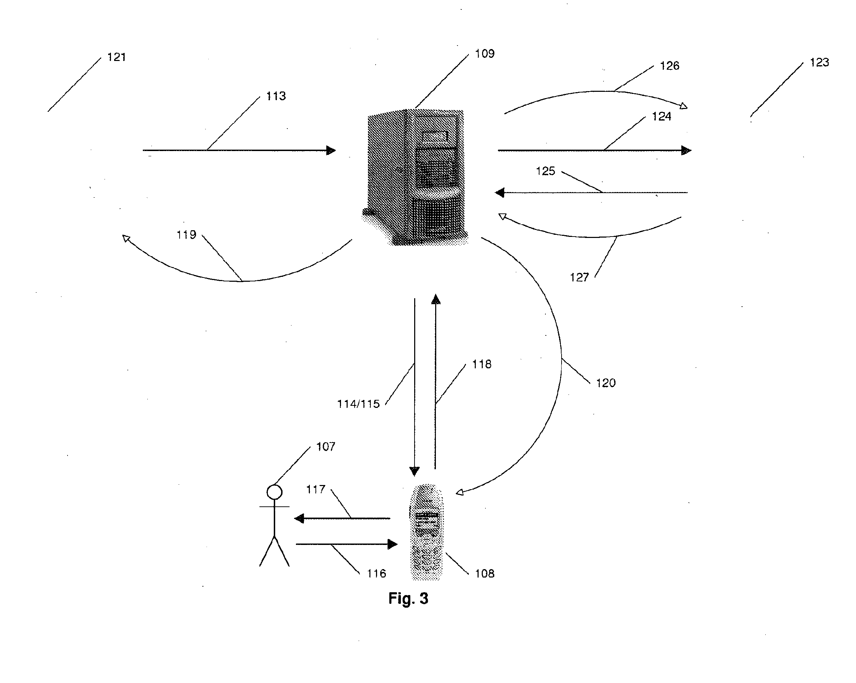

In order to implement such procedure in a practical environment where electronic payment systems already exist, it is advantageous to provide a fourth entity, hereinafter the "Payer", associated to at least one electronic equipment (labelled 123 in the Fig.3), that takes care of the payment, i.e. of the transfer of money from the bank account of the User to the bank account of the Manager (upon authentication of, i.e. authorization by, the User); it is provided that the Payer communicates with the Intermediary but not with the User and the Manager; both the User and the Manager needs to subscribe and to register to the service so that the data necessary for managing the authorization and the payment are available to Intermediary and to the Payer according to their needs and according to the specific implementation - subscription and registration may take place in the same way both for the User and for the Manager for example as described above and may involves only (or almost only) the Intermediary or both the Intermediary and the Payer, depending on the implementation.

It is to be noted that this procedure may be implemented so that it is applicable not only to payments from a buyer to a seller but also to transfers of money between persons; according to the implementation, the subscribers may act as a "User"/"Buyer" or "Manager"/"Seller" depending on the moment.

The main differences between the authentication procedure and the payment authorization procedure are the following:
- the first part of the Authentication Request Message is necessary as it must contain at least the amount of the payment;
- a third part of the Authentication Request Message is necessary as it must contain a code identifying the Manager, i.e. the beneficiary of the payment;
- the identification codes of the User and of the Manager as well as at least the amount of the payment need to be communicated to the Payer by the Intermediary;
- typically the mobile telephone number of the User (and of the Manager) is stored internally to the Payer and not to the Intermediary; therefore, upon an Authentication Request (i.e. a Payment Request), the Intermediary should collect this information from the Payer;
- the Authentication Key is generated by the Payer and is a financial transaction code unique to the Payer; therefore, upon an Authentication Request (i.e. a Payment Request), the Intermediary should collect this information from the Payer;
- in case of confirmed authentication (i.e. authorization of payment by the User), a "Request of Payment Message" is sent by the Intermediary to the Payer and reference is made to the financial transaction code;
- the Confirmed Authentication Message (that in this case means "payment confirmed") or Denied Authentication Message (that in this case means "payment denied") is sent by the Intermediary to the User and the Manager only after receiving a "Result of Payment Message" from the Payer in response to the "Request of Payment Message".

The payment authorization procedure according to the present invention is applicable also to the payments connected to electronic commerce.

In the case of electronic commerce, according to a first possibility, the Manager/Seller sells his own products/services and the Manager/Seller electronic equipment is a computer of the Manager/Seller connected to the Internet, receiving input from the User/Buyer and communicating with the Intermediary electronic equipment. The identification codes of the User/Buyer, i.e. the entity giving money, and of the Manager/Seller, i.e. the entity receiving money, as well as at least the amount of the payment need to be communicated to the Payer.

In the case of electronic commerce, according to a second possibility, the Manager/Seller sells products/services of a Third Party (such as e.g. "eBay") and the Manager/Seller electronic equipment is a computer of the Manager/Seller connected to the Internet, receiving input from the User/Buyer and communicating with the Intermediary electronic equipment. The identification codes of the User/Buyer, i.e. the entity giving money, and of the Third Party, i.e. the entity receiving money, as well as at least the amount of the payment need to be appropriately communicated to the Payer; therefore, subscription and registration need to be done by the User/Buyer and the Third Party, while the Manager/Seller has a preferential relation with the Intermediary.

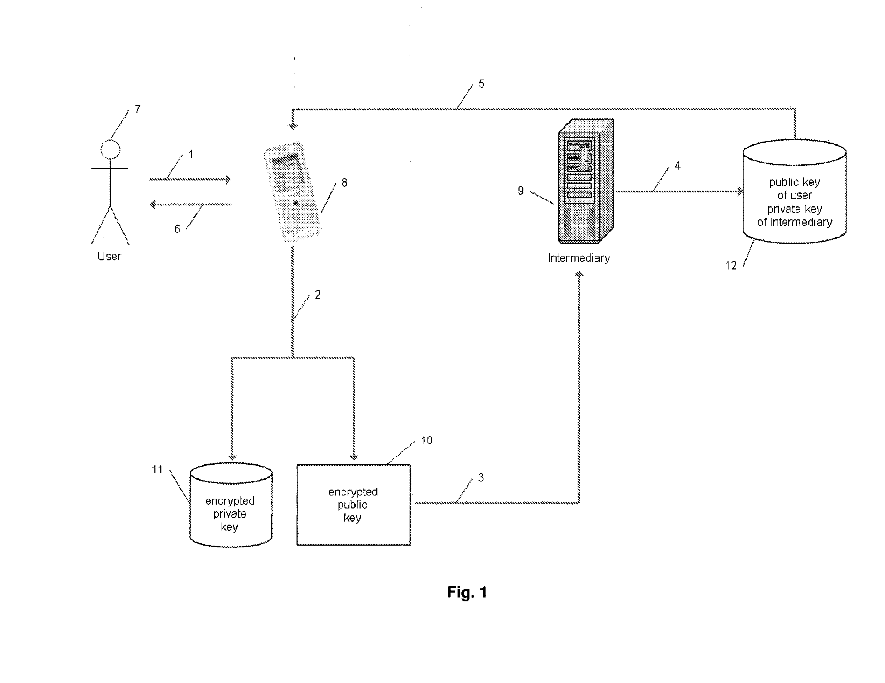

### Embodiment of Fig.1

In Fig.1 the User 7 configures (arrow 1) a PIN on the Client installed on board mobile phone 8. As the User creates the PIN, it is known only to him. The Client, after the configuration of the PIN by the User, generates a pair of "public key - private key", encrypts (arrow 2) the generated private key using the PIN as encryption key and saves the so-encrypted private key 11 inside the mobile phone 8. Finally, he encrypts (arrow 2) the generated public key, encrypted via the Registration Key, and sends (arrow 3) a registration message containing the so-encrypted public key 10 to the Intermediary electronic equipment 9.

The Intermediary electronic equipment 9, after receiving the registration message, validates the registration message received, based on the sender's mobile telephone number and the Registration Key; it generates a pair of "public key - private key"; it associates (arrow 4) in his database 12 the private key thus generated, i.e. "Intermediary private key", with the User public key; it sends (arrow 5) a message of registration validation, containing the Intermediary public key, encrypted via the Registration Key", to the User electronic equipment 8.

The Client, on board the mobile phone 8 of the User, after receiving the registration validation message, saves the Intermediary public key" provided by the Intermediary electronic equipment inside the mobile phone 8 which emits (arrow 6) a signal of completed procedure. At this point, the User is registered with the Authentication Service.

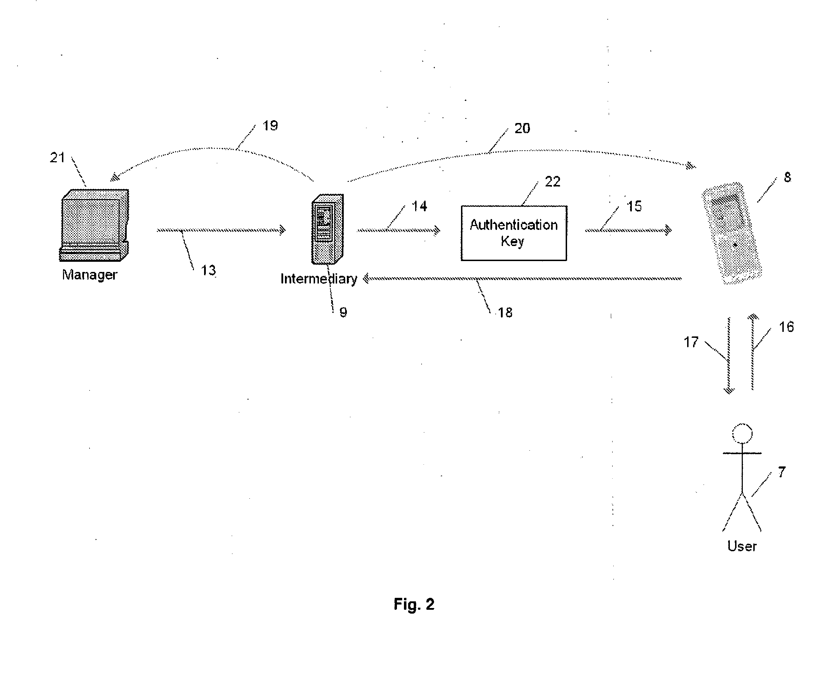

### Embodiment of Fig.2

In Fig.2, the Manager electronic equipment 21 communicates (arrow 13) the User Code to the Intermediary electronic equipment 9; the Intermediary electronic equipment 9 provides to generate 14 the temporary Authentication Key 22, which can be used only once; the Intermediary electronic equipment 9 sends (arrow 15) the Authentication Request Message to the User electronic equipment 8.

The Client, on board the mobile phone 8 of the User, receives the Authentication Request Message. Therefore, it warns (arrow 17) the person currently using the mobile phone 8, that as a rule should correspond to the User 7, about the presence of an Authentication Request and, upon request by the User, it presents (arrow 17) the Service Data contained in the Authentication Request Message and asks (arrow 17) the User 7 whether he intends to authenticate or not with the service; the Client asks (arrow 17) for a PIN upon positive response by the User 7 and the User 7 provides (arrow 16) a PIN that should correspond to the PIN provided by the User 7 at registration.

Through the received PIN (if correct), the Client can extract and decrypt the User private key and, through the just-decrypted User private key, it can decrypt the second part of the Authentication Requests Message, in this way obtaining the Authentication Key.

The Client onboard the User mobile phone 8 sends (arrow 18) to the Intermediary electronic equipment 9 a response message to the Authentication Request containing the Authentication Key, encrypted via the Intermediary public key.

The Intermediary electronic equipment 9, after receiving the response to the Authentication Request, decrypts the Authentication Key through the Intermediary private key, validates the Authentication Key, and, in case of validation with positive result, it sends (arrow 19) a message of Confirmed Authentication to the Manager electronic equipment 21 and typically the same message of Confirmed Authentication to the User electronic equipment 8; in case of validation with negative outcome, it sends a message of Denied Authentication to the User and the Manager.

The Authentication Procedure is now completed.

As it should be apparent from what has just been described, the present invention has the following advantages :
- no sensitive data is transmitted during the authentication procedure and the Authentication Key may be so selected to be used only one time; in particular, the PIN is not output by any entity, is chosen by the User, is never permanently stored inside the User electronic equipment and is never transmitted outside of the User electronic equipment;
- the use of text messages encrypted by means of asymmetric cryptography assures security, robustness and certainty; moreover, as authentication is always requested to the User by the Manager, the request is always directed to the mobile phone terminal of the User, effectively preventing any type of fraud;
- the authentication procedure provides only typing the PIN in order to be completed by the User; this facilitates operations on the mobile phone because there is no need e.g. to write text messages directly; the use of mobile phone and SMS allows for the use of the present invention in any context in today's daily life at any time and wherever in the world.

### Embodiment of Fig.3

It is to be noted that in Fig.3 reference numerals are used similar to those used in Fig.2; in particular, corresponding (or almost corresponding) element are labelled with the same number but augmented by 100.

In Fig.3, the Manager/Seller electronic equipment 121 sends (arrows 113) a payment request to the Intermediary electronic equipment 109 containing payment data, its identification code and the User/Buyer identification code; the Intermediary electronic equipment 109 checks the authenticity of this request by decrypting it via the Intermediary private key and, if the check gives a positive result, requests (arrow 124) a check of the received data to the Payer electronic equipment 123 (this is the interface with an already existing payment circuit non shown in the figure).

The Payer electronic equipment 123 gives a reply (arrow 125) with a positive or negative outcome; if the outcome is positive, the Payer electronic equipment 123 places into the reply the mobile telephone number of the User/Buyer and a Financial Transaction Code (corresponding to already mentioned Authentication Key); this code is unique and may be used only once so to identify with certainty a financial transaction of the payment circuit.

Once the Intermediary electronic equipment 109 has received the necessary information from the Payer electronic equipment 123, the Intermediary electronic equipment 109 sends (arrow 114/115) to the User/Buyer electronic equipment 108 of the User/Buyer 107 a Payment Authorization Request Message; this message comprises two parts: a first part containing payment data (at least the payment amount) and a second part containing the Financial Transaction Code, encrypted via the User/Buyer public key and possibly digitally signed by the Intermediary. The Client onboard the User/Buyer electronic equipment 108 of the User/Buyer 107 receives the Payment Authorization Request Message, checks the signature (if any) and performs the following steps:
- presenting (arrow 117) the request to User/Buyer 107;
- upon request (arrow 116) by the User/Buyer 107, presenting (arrow 117) the payment data (extracted from the received Payment Authorization Request Message) to User/Buyer 107 and asking (arrow 117) to User/Buyer 107 the authorization to pay;
- upon positive answer (arrow 16) by the User/Buyer 107, requesting (arrow 117) a PIN;
- through a correct PIN received from the User/Buyer 107, decrypting the second part of the received Payment Authorization Request Message, obtaining in this way the Financial Transaction Code;
- sending (arrow 118) to the Intermediary electronic equipment 109 a reply to the payment authorization request containing at least the Financial Transaction Code, encrypted via the Intermediary public key and possibly digitally signed by the User/Buyer.

The Intermediary electronic equipment 109, upon reception of the reply to the payment authorization request from the User/Buyer electronic equipment 108, checks the signature (if any) and performs the following steps:
- decrypting the encrypted Financial Transaction Code via the Intermediary private key;
- validating the reply to the payment authorization request e.g. by the comparing the Financial Transaction Code sent to the User/Buyer and the Financial Transaction Code received from the User/Buyer;
- in case of positive outcome of the validation, sending (arrow 126) to the Payer electronic equipment 123 a Payment Request Message containing the payment data and/or the Financial Transaction Code.

The Payer electronic equipment 123, upon reception of the Payment Request Message from the Intermediary electronic equipment 109, takes the necessary steps for carrying out the payment (not described here as they are typical of the known payment circuits) and sends (arrow 127) to the Intermediary electronic equipment 109 a Payment Result Message containing information regarding the outcome of the payment that could be positive or negative (for example in case the User/Buyer has not sufficient money in his bank account).

The Intermediary electronic equipment 109, upon reception of the Payment Result Message from the Payer electronic equipment 123, sends a Payment Confirmed Message or Payment Denied Message both to (arrow 120) the User/Buyer electronic equipment and to (arrow 119) the Manager/Seller electronic equipment. The payment authorization procedure (and also the payment) is now completed.

## Claims

1. Method for authenticating a User (7) by a Manager (21), wherein said User is associated to an electronic equipment in the form of a mobile phone terminal (8) on which a software program is loaded, said software program being adapted to store inside said mobile phone terminal a cryptographic key encrypted via a PIN, wherein said Manager is associated to an electronic equipment, wherein the method provides an Intermediary (9) associated to an electronic equipment adapted to communicate with said User electronic equipment and said Manager electronic equipment by means of text messages and to store a mobile telephone number of the User, and provides the following steps:
A) the Manager electronic equipment sends to the Intermediary electronic equipment a text message containing at least an identity code of the User,
B) the Intermediary electronic equipment identifies the User and the User mobile telephone number and sends to the User electronic equipment a text message containing at least an authentication key, said text message being encrypted,
C) the User electronic equipment receives said text message from the Intermediary electronic equipment, decrypts it via said cryptographic key after having obtained said PIN from a person using the User mobile phone terminal, and sends another encrypted text message to the Intermediary electronic equipment containing at least said authentication key,
D) the Intermediary electronic equipment receives said other encrypted text message from the User electronic equipment, decrypts it, and performs a comparison between the authentication key sent to the User electronic equipment and the authentication key received from the User electronic equipment, and
E) the Intermediary electronic equipment sends a text message containing at least the outcome of said comparison or information deriving therefrom to at least the Manager electronic equipment;
wherein said PIN is used by said mobile phone terminal only for internal encryption and decryption of said cryptographic key after having received it from a person using the User mobile phone terminal in each case;
whereby the Manager authenticates the User based on said received outcome or information deriving therefrom.

2. Authentication method according to claim 1, wherein the text messages exchanged between the User electronic equipment and the Intermediary electronic equipment are phone text messages, in particular SMS and/or MMS.

3. Authentication method according to claim 1 or 2, wherein the Manager is associated to an electronic equipment in the form of a mobile phone terminal and the text messages exchanged between the Manager electronic equipment and the Intermediary electronic equipment are phone text messages, in particular SMS and/or MMS.

4. Authentication method according to claim 1 or 2, wherein the Manager is associated to an electronic equipment in the form of a computer user terminal and the text messages exchanged between the Manager electronic equipment and the Intermediary electronic equipment are computer text messages, transported in particular using TCP/IP protocol.

5. Authentication method according to claim 2 or 3, wherein each of said text messages corresponds to only one SMS or MMS.

6. Authentication method according to any of the preceding claims, wherein said PIN comprises preferably 4 to 8 digits and wherein for encryption and decryption of said cryptographic key a hash function is applied to said PIN giving a sequence of bits having a length preferably from 128 to 256.

7. Authentication method according to any of the preceding claims, wherein the text messages exchanged between the Intermediary electronic equipment and the User electronic equipment are encrypted.

8. Authentication method according to any of the preceding claims, wherein the text messages exchanged between the Intermediary electronic equipment and the Manager electronic equipment are encrypted.

9. Authentication method according to claims 7 and/or 8, wherein the text messages are encrypted by means of Elliptic Curve Cryptography.

10. Authentication method according to any of the preceding claims, wherein the User electronic equipment is adapted to manage User private and public keys, to store the User private key and preferably an Intermediary public key, said keys being used for encrypting and decrypting text messages to and/or from said Intermediary electronic equipment.

11. Authentication method according to any of the preceding claims, wherein the Manager electronic equipment is adapted to manage Manager private and public keys, to store the Manager private key and preferably an Intermediary public key, said keys being used for encrypting and decrypting text messages to and/or from said Intermediary electronic equipment.

12. Authentication method according to any of the preceding claims, wherein the Intermediary electronic equipment is adapted to manage Intermediary private and public keys, to store the Intermediary private key and preferably an User public key and/or a Manager public key, said keys being used for encrypting and decrypting text messages to and/or from said User electronic equipment and/or said Manager electronic equipment.

13. Authentication method according to any of the preceding claims, wherein the communications between User electronic equipment, Intermediary electronic equipment, Manager electronic equipment may comprise the exchange of non-encrypted text messages and/or fully-encrypted text messages and/or partially encrypted text messages, such feature of text messages depending on their content and/or the entities involved into the exchange.

14. Authentication method according to any of the preceding claims, wherein at step E the Intermediary electronic equipment sends the text message also to the User electronic equipment.

15. Authentication method according to any of the preceding claims, providing also a preliminary registration procedure during which at least the following steps take place:
- said cryptographic key is encrypted via a PIN and stored inside the User mobile phone terminal, and
- said User mobile telephone number is stored by the Manager electronic equipment.

16. Authentication method according to any of the preceding claims, wherein at step A the text message further contains at least a reference to a product or service requested by the User to the Manager, at step B the text message further contains at least a reference to a product or service requested by the User to the Manager, and at step C the other encrypted text message further contains information relating to an authorization of payment according to input from a person using the User mobile phone terminal.

17. Method for authorizing the payment from a User to a Manager, comprising the authentication method according to claim 16 and providing also a Payer associated to at least one electronic equipment adapted to communicate with said Intermediary electronic equipment, wherein after step D and before step E the Intermediary electronic equipment sends a request of payment to the Payer electronic equipment according to the outcome of said comparison, and receives a result of payment from the Payer electronic equipment, and wherein at step E the text message contains at least said result of payment.

18. Payment authorization method according to claim 17, wherein at step B the Intermediary electronic equipment obtains said authentication key from the Payer electronic equipment, said authentication key being a financial transaction code unique to the Payer.

19. Electronic equipment comprising technical features that make it adapted to operate as Intermediary according to any of claims from 1 to 18.

## Patentansprüche

1. Verfahren zum Authentifizieren eines Benutzers (7) durch eine Verwaltungseinrichtung (21), wobei der Benutzer zu einem elektronischen Gerät in Form eines Mobiltelefonendgeräts (8) gehört, an dem ein Softwareprogramm geladen ist, wobei das Softwareprogramm geeignet ist, um in dem Mobiltelefonendgerät einen über eine PIN verschlüsselten kryptographischen Schlüssel zu speichern, wobei die Verwaltungseinrichtung zu einem elektronischen Gerät gehört, wobei das Verfahren eine Vermittlungseinrichtung (9) bereitstellt, die zu einem elektronischen Gerät gehört und geeignet ist, um mit dem elektronischen Gerät des Benutzers und dem elektronischen Gerät der Verwaltungseinrichtung mittels Textnachrichten zu kommunizieren und eine Mobiltelefonnummer des Benutzers zu speichern, und wobei es die folgenden Schritte bereitstellt:
A) das elektronische Gerät der Verwaltungseinrichtung sendet dem elektronischen Gerät der Vermittlungseinrichtung eine Textnachricht, die zumindest einen Identitätscode des Benutzers enthält,
B) das elektronische Gerät der Vermittlungseinrichtung identifiziert den Benutzer und die Mobiltelefonnummer des Benutzers und sendet dem elektronischen Gerät des Benutzers eine Textnachricht, die zumindest einen Authentifizierungsschlüssel enthält, wobei die Textnachricht verschlüsselt ist,
C) das elektronische Gerät des Benutzers empfängt die Textnachricht von dem elektronischen Gerät der Vermittlungseinrichtung, entschlüsselt sie über den kryptographischen Schlüssel, nachdem die PIN von einer Person, die das Mobiltelefonendgerät des Benutzers verwendet, erhalten wurde, und sendet eine andere verschlüsselte Textnachricht an das elektronische Gerät der Vermittlungseinrichtung, die zumindest den Authentifizierungsschlüssel enthält,
D) das elektronische Gerät der Vermittlungseinrichtung empfängt die andere verschlüsselte Textnachricht von dem elektronischen Gerät des Benutzers, entschlüsselt sie und führt einen Vergleich zwischen dem an das elektronische Gerät des Benutzers gesendeten Authentifizierungsschlüssel und dem von dem elektronischen Gerät des Benutzers empfangenen Authentifizierungsschlüssel durch und
E) das elektronische Gerät der Vermittlungseinrichtung sendet eine Textnachricht, die zumindest das Ergebnis des Vergleichs oder eine sich hiervon ableitende Information enthält, an zumindest das elektronische Gerät der Verwaltungseinrichtung;
wobei die PIN durch das Mobiltelefonendgerät in jedem Fall nur für eine interne Verschlüsselung und Entschlüsselung des kryptographischen Schlüssels verwendet wird, nachdem sie von einer Person empfangen wurde, die das Mobiltelefonendgerät des Benutzers verwendet; wodurch die Verwaltungseinrichtung den Benutzer auf der Grundlage des empfangenen Ergebnisses oder der sich hiervon ableitenden Information authentifiziert.

2. Authentifizierungsverfahren nach Anspruch 1,
wobei die Textnachrichten, die zwischen dem elektronischen Gerät des Benutzers und dem elektronischen Gerät der Vermittlungseinrichtung ausgetauscht werden, Telefontextnachrichten, im Speziellen SMS und/oder MMS, sind.

3. Authentifizierungsverfahren nach Anspruch 1 oder 2,
wobei die Verwaltungseinrichtung zu einem elektronischen Gerät in Form eines Mobiltelefonendgeräts gehört und die Textnachrichten, die zwischen dem elektronischen Gerät der Verwaltungseinrichtung und dem elektronischen Gerät der Vermittlungseinrichtung ausgetauscht werden, Telefontextnachrichten, im Speziellen SMS und/oder MMS, sind.

4. Authentifizierungsverfahren nach Anspruch 1 oder 2,
wobei die Verwaltungseinrichtung zu einem elektronischen Gerät in Form eines Computerbenutzerendgeräts gehört und die Textnachrichten, die zwischen dem elektronischen Gerät der Verwaltungseinrichtung und dem elektronischen Gerät der Vermittlungseinrichtung ausgetauscht werden, Computertextnachrichten sind, die im Speziellen unter Verwendung des TCP/IP-Protokolls übermittelt werden.

5. Authentifizierungsverfahren nach Anspruch 2 oder 3,
wobei jede der Textnachrichten nur einer SMS oder MMS entspricht.

6. Authentifizierungsverfahren nach einem der vorstehenden Ansprüche,
wobei die PIN vorzugsweise 4 bis 8 Ziffern umfasst und wobei für die Verschlüsselung und Entschlüsselung des kryptographischen Schlüssels eine Hashfunktion auf die PIN angewandt wird, die eine Folge von Bits mit einer Länge von vorzugsweise 128 bis 256 liefert.

7. Authentifizierungsverfahren nach einem der vorstehenden Ansprüche,
wobei die Textnachrichten, die zwischen dem elektronischen Gerät der Vermittlungseinrichtung und dem elektronischen Gerät des Benutzers ausgetauscht werden, verschlüsselt werden.

8. Authentifizierungsverfahren nach einem der vorstehenden Ansprüche,
wobei die Textnachrichten, die zwischen dem elektronischen Gerät der Vermittlungseinrichtung und dem elektronischen Gerät der Verwaltungseinrichtung ausgetauscht werden, verschlüsselt werden.

9. Authentifizierungsverfahren nach Anspruch 7 und/oder 8,
wobei die Textnachrichten mittels Elliptische-Kurven-Kryptographie verschlüsselt werden.

10. Authentifizierungsverfahren nach einem der vorstehenden Ansprüche,
wobei das elektronische Gerät des Benutzers geeignet ist, um private und öffentliche Schlüssel des Benutzers zu verwalten, um den privaten Schlüssel des Benutzers und vorzugsweise einen öffentlichen Schlüssel der Vermittlungseinrichtung zu speichern, wobei die Schlüssel zum Verschlüsseln und Entschlüsseln von Textnachrichten für das und/oder von dem elektronische(n) Gerät der Vermittlungseinrichtung verwendet werden.

11. Authentifizierungsverfahren nach einem der vorstehenden Ansprüche,
wobei das elektronische Gerät der Verwaltungseinrichtung geeignet ist, um private und öffentliche Schlüssel der Verwaltungseinrichtung zu verwalten, um den privaten Schlüssel der Verwaltungseinrichtung und vorzugsweise einen öffentlichen Schlüssel der Vermittlungseinrichtung zu speichern, wobei die Schlüssel zum Verschlüsseln und Entschlüsseln von Textnachrichten für das und/oder von dem elektronische(n) Gerät der Vermittlungseinrichtung verwendet werden.

12. Authentifizierungsverfahren nach einem der vorstehenden Ansprüche,
wobei das elektronische Gerät der Vermittlungseinrichtung geeignet ist, um private und öffentliche Schlüssel der Vermittlungseinrichtung zu verwalten, um den privaten Schlüssel der Vermittlungseinrichtung und vorzugsweise einen öffentlichen Schlüssel des Benutzers und/oder einen öffentlichen Schlüssel der Verwaltungseinrichtung zu speichern, wobei die Schlüssel verwendet werden, um Textnachrichten für das und/oder von dem elektronische(n) Gerät des Benutzers und/oder elektronische(n) Gerät der Verwaltungseinrichtung zu verschlüsseln und zu entschlüsseln.

13. Authentifizierungsverfahren nach einem der vorstehenden Ansprüche,
wobei die Kommunikationen zwischen dem elektronischen Gerät des Benutzers, dem elektronischen Gerät der Vermittlungseinrichtung, dem elektronischen Gerät der Verwaltungseinrichtung den Austausch von nicht verschlüsselten Textnachrichten und/oder vollständig verschlüsselten Textnachrichten und/oder teilweise verschlüsselten Textnachrichten umfassen können, wobei ein derartiges Merkmal von Textnachrichten von ihrem Inhalt und/oder den Entitäten, die in dem Austausch umfasst sind, abhängt.

14. Authentifizierungsverfahren nach einem der vorstehenden Ansprüche,
wobei das elektronische Gerät der Vermittlungseinrichtung in Schritt E die Textnachricht auch an das elektronische Gerät des Benutzers sendet.

15. Authentifizierungsverfahren nach einem der vorstehenden Ansprüche, wobei auch eine vorbereitende Registrierungsprozedur bereitgestellt wird, während der zumindest die folgenden Schritte stattfinden:
- der kryptographische Schlüssel wird über eine PIN verschlüsselt und in dem Mobiltelefonendgerät des Benutzers gespeichert, und
- die Mobiltelefonnummer des Benutzers wird durch das elektronische Gerät der Verwaltungseinrichtung gespeichert.

16. Authentifizierungsverfahren nach einem der vorstehenden Ansprüche,
wobei die Textnachricht in Schritt A ferner zumindest eine Referenz hinsichtlich eines Produkts oder Diensts, das oder der durch den Benutzer bei der Verwaltungseinrichtung angefordert wird, enthält, die Textnachricht in Schritt B ferner zumindest eine Referenz hinsichtlich eines Produkts oder Diensts, das oder der durch den Benutzer bei der Verwaltungseinrichtung angefordert wird, enthält, und die andere verschlüsselte Textnachricht in Schritt C ferner eine Information bezüglich einer Bezahlungsautorisierung gemäß einer Eingabe von einer Person unter Verwendung des Mobiltelefonendgeräts des Benutzers enthält.

17. Verfahren zum Autorisieren der Bezahlung von einem Benutzer an eine Verwaltungseinrichtung, umfassend das Authentifizierungsverfahren nach Anspruch 16, und wobei auch eine Bezahleinrichtung bereitgestellt wird, die zu zumindest einem elektronischen Gerät gehört und geeignet ist, um mit dem elektronischen Gerät der Vermittlungseinrichtung zu kommunizieren, wobei das elektronische Gerät der Vermittlungseinrichtung nach Schritt D und vor Schritt E gemäß dem Ergebnis des Vergleichs eine Bezahlungsanforderung an das elektronische Gerät der Bezahleinrichtung sendet und ein Resultat der Bezahlung von dem elektronischen Gerät der Bezahleinrichtung empfängt, und wobei die Textnachricht in Schritt E zumindest das Resultat der Bezahlung enthält.

18. Bezahlungsautorisierungsverfahren nach Anspruch 17,
wobei das elektronische Gerät der Vermittlungseinrichtung in Schritt B den Authentifizierungsschlüssel von dem elektronischen Gerät der Bezahleinrichtung erhält, wobei der Authentifizierungsschlüssel ein Finanztransaktionscode ist, der für die Bezahleinrichtung eindeutig ist.

19. Elektronisches Gerät, umfassend technische Merkmale, die es geeignet machen, um als Vermittlungseinrichtung nach einem der Ansprüche 1 bis 18 zu arbeiten.

## Revendications

1. Procédé pour l'authentification d'un utilisateur (7) par un gestionnaire (21), dans lequel ledit utilisateur est associé à un équipement électronique sous la forme d'un terminal de téléphone mobile (8) sur lequel un logiciel est chargé, ledit logiciel étant adapté pour stocker à l'intérieur dudit terminal de téléphone mobile une clé de chiffrement chiffrée par l'intermédiaire d'un PIN, dans lequel ledit gestionnaire est associé à un équipement électronique, dans lequel le procédé fournit un intermédiaire (9) associé à un équipement électronique adapté pour communiquer avec ledit équipement électronique d'utilisateur et ledit équipement électronique de gestionnaire au moyen de messages de texte et pour stocker un numéro de téléphone mobile de l'utilisateur, et fournit les étapes suivantes :
A) l'équipement électronique de gestionnaire envoie à l'équipement électronique d'intermédiaire un message de texte contenant au moins un code d'identité de l'utilisateur,
B) l'équipement électronique d'intermédiaire identifie l'utilisateur et le numéro de téléphone mobile de l'utilisateur et envoie à l'équipement électronique d'utilisateur un message de texte contenant au moins une clé d'authentification, ledit message de texte étant chiffré,
C) l'équipement électronique d'utilisateur reçoit ledit message de texte à partir de l'équipement électronique d'intermédiaire, le déchiffre par l'intermédiaire de ladite clé de chiffrement après avoir obtenu ledit PIN à partir d'une personne utilisant le terminal de téléphone mobile d'utilisateur, et envoie à l'équipement électronique d'intermédiaire un autre message de texte chiffré contenant au moins ladite clé d'authentification,
D) l'équipement électronique d'intermédiaire reçoit ledit autre message de texte chiffré à partir de l'équipement électronique d'utilisateur, le déchiffre et effectue une comparaison entre la clé d'authentification envoyée à l'équipement électronique d'utilisateur et la clé d'authentification reçue à partir de l'équipement électronique d'utilisateur, et
E) l'équipement électronique d'intermédiaire envoie à au moins l'équipement électronique de gestionnaire un message de texte contenant au moins le résultat de ladite comparaison ou des informations dérivant de celui-ci ;
dans lequel ledit PIN est utilisé par ledit terminal de téléphone mobile seulement pour un chiffrement et un déchiffrement interne de ladite clé de chiffrement après l'avoir reçue à partir d'une personne utilisant le terminal de téléphone mobile d'utilisateur dans chaque cas ;
moyennant quoi le gestionnaire authentifie l'utilisateur sur la base dudit résultat reçu ou desdites informations dérivant de celui-ci.

2. Procédé d'authentification selon la revendication 1, dans lequel les messages de texte échangés entre l'équipement électronique d'utilisateur et l'équipement électronique d'intermédiaire sont des messages de texte de téléphone, en particulier des SMS et/ou des MMS.

3. Procédé d'authentification selon la revendication 1 ou 2, dans lequel le gestionnaire est associé à un équipement électronique sous la forme d'un terminal téléphonique mobile et les messages de texte échangés entre l'équipement électronique de gestionnaire et l'équipement électronique d'intermédiaire sont des messages de texte de téléphone, en particulier des SMS et/ou des MMS.

4. Procédé d'authentification selon la revendication 1 ou 2, dans lequel le gestionnaire est associé à un équipement électronique sous la forme d'un terminal utilisateur informatique et les messages de texte échangés entre l'équipement électronique de gestionnaire et l'équipement électronique d'intermédiaire sont des messages de texte d'ordinateur, transportés en particulier en utilisant un protocole TCP/IP.

5. Procédé d'authentification selon la revendication 2 ou 3, dans lequel chacun desdits messages de texte correspond à seulement un SMS ou un MMS.

6. Procédé d'authentification selon l'une quelconque des revendications précédentes, dans lequel ledit PIN comprend de préférence 4 à 8 chiffres et dans lequel, pour le chiffrement et le déchiffrement de ladite clé de chiffrement, une fonction de hachage est appliquée audit PIN en donnant une séquence de bits ayant une longueur de préférence de 128 à 256.

7. Procédé d'authentification selon l'une quelconque des revendications précédentes, dans lequel les messages de texte échangés entre l'équipement électronique d'intermédiaire et l'équipement électronique d'utilisateur sont chiffrés.

8. Procédé d'authentification selon l'une quelconque des revendications précédentes, dans lequel les messages de texte échangés entre l'équipement électronique d'intermédiaire et l'équipement électronique de gestionnaire sont chiffrés.

9. Procédé d'authentification selon la revendication 7 et/ou 8, dans lequel les messages de texte sont chiffrés au moyen d'une cryptographie à courbes elliptiques.

10. Procédé d'authentification selon l'une quelconque des revendications précédentes, dans lequel l'équipement électronique d'utilisateur est adapté pour gérer des clés privée et publique d'utilisateur, pour stocker la clé privée d'utilisateur et de préférence une clé publique d'intermédiaire, lesdites clés étant utilisées pour chiffrer et déchiffrer des messages de texte vers et/ou en provenance dudit équipement électronique d'intermédiaire.

11. Procédé d'authentification selon l'une quelconque des revendications précédentes, dans lequel l'équipement électronique de gestionnaire est adapté pour gérer des clés privée et publique de gestionnaire, pour stocker la clé privée de gestionnaire et de préférence une clé publique d'intermédiaire, lesdites clés étant utilisées pour chiffrer et déchiffrer des messages de texte vers et/ou en provenance dudit équipement électronique d'intermédiaire.

12. Procédé d'authentification selon l'une quelconque des revendications précédentes, dans lequel l'équipement électronique d'intermédiaire est adapté pour gérer des clés privée et publique d'intermédiaire, pour stocker la clé privée d'intermédiaire et de préférence une clé publique d'utilisateur et/ou une clé publique de gestionnaire, lesdites clés étant utilisées pour chiffrer et déchiffrer des messages de texte vers et/ou en provenance dudit équipement électronique d'utilisateur et/ou dudit équipement électronique de gestionnaire.

13. Procédé d'authentification selon l'une quelconque des revendications précédentes, dans lequel les communications entre équipement électronique d'utilisateur, équipement électronique d'intermédiaire et équipement électronique de gestionnaire peuvent comprendre l'échange de messages de texte non chiffrés et/ou de messages de texte totalement chiffrés et/ou des messages de texte partiellement chiffrés, cette caractéristique de messages de texte dépendant de leur contenu et/ou des entités impliquées dans l'échange.

14. Procédé d'authentification selon l'une quelconque des revendications précédentes, dans lequel, dans l'étape E, l'équipement électronique d'intermédiaire envoie le message de texte également à l'équipement électronique d'utilisateur.

15. Procédé d'authentification selon l'une quelconque des revendications précédentes, fournissant également une procédure d'enregistrement préliminaire durant laquelle au moins les étapes suivantes ont lieu :
- ladite clé de chiffrement est chiffrée par l'intermédiaire d'un PIN stocké à l'intérieur du terminal de téléphone mobile d'utilisateur, et
- ledit numéro de téléphone mobile d'utilisateur est stocké par l'équipement électronique de gestionnaire.

16. Procédé d'authentification selon l'une quelconque des revendications précédentes, dans lequel, dans l'étape A, le message de texte contient en outre au moins une référence à un produit ou service demandé par l'utilisateur au gestionnaire, dans l'étape B, le message de texte contient en outre au moins une référence à un produit ou service demandé par l'utilisateur au gestionnaire et, dans l'étape C, l'autre message de texte chiffré contient en outre des informations relatives à une autorisation de paiement en fonction d'une entrée par une personne utilisant le terminal de téléphone mobile d'utilisateur.

17. Procédé pour autoriser le paiement d'un utilisateur à un gestionnaire, comprenant le procédé d'authentification selon la revendication 16 et fournissant également un payeur associé à au moins un équipement électronique adapté pour communiquer avec ledit équipement électronique d'intermédiaire, dans lequel, après l'étape D et avant l'étape E, l'équipement électronique d'intermédiaire envoie une demande de paiement à l'équipement électronique du payeur en fonction du résultat de ladite comparaison, et reçoit un résultat de paiement à partir de l'équipement électronique du payeur, et dans lequel, dans l'étape E, le message de texte contient au moins ledit résultat de paiement.

18. Procédé d'autorisation de paiement selon la revendication 17, dans lequel, dans l'étape B, l'équipement électronique d'intermédiaire obtient ladite clé d'authentification à partir de l'équipement électronique du payeur, ladite clé d'authentification étant un code de transaction financière unique pour le payeur.

19. Equipement électronique comprenant des caractéristiques techniques qui le rendent adapté pour fonctionner comme intermédiaire selon l'une quelconque des revendications 1 à 18.
